# EUROPEAN PATENT SPECIFICATION

(11) **EP 2 012 900 B1**
(45) Date of publication and mention of the grant of the patent: **06.05.2015**
(21) Application number: 07754153.0
(22) Date of filing: 29.03.2007
(51) Int. Cl.: B01J 20/28, B01D 39/16, B01D 39/20, B01J 20/20

(54) **HYBRID FILTER ELEMENT AND MANUFACTURING METHOD**
HYBRIDES FILTERELEMENT UND HERSTELLUNGSVERFAHREN
ÉLÉMENT DE FILTRATION HYBRIDE ET MÉTHODE DE FABRICATION

(30) Priority: 28.04.2006 US 413487
(43) Date of publication of application: 14.01.2009
(73) Proprietor: PECOFacet (US), Inc., Mineral Wells, TX 76068 (US)
(72) Inventor: KROGUE, John, A., Mineral Wells, TX 76067 (US); CLOUD, Daniel, Weatherford, TX 76088 (US)
(74) Representative: Pronovem
(86) International application number: PCT/US2007/007587
(87) International publication number: WO 2007/126828

(56) References cited:
- EP-A- 1 281 677
- US-A- 5 126 043
- US-A- 5 639 370
- US-A- 5 827 430
- US-A1- 2003 222 010
- US-A1- 2004 245 170
- US-B1- 6 368 504

## Description

### Technical Field

The invention relates to filter elements and filter vessels used to filter gas and liquid streams such as natural gas streams, natural gas processing liquid streams, industrial chemical streams and the like.

### Background Art

Many separation processes use liquid solvents to physically or chemically adsorb or absorb chemical species from gases or liquids. These solvents remove the specific contaminant from the stream (at which point they are referred to as being "rich") and are then regenerated with the substance being stripped from the solvent by temperature or by other means. The now "lean" solvent can then be brought into contact with the process stream. This provides for a continuous loop of the solvent being enriched and then stripped of the substance being removed. These solvent processes are used to either purify the process stream by removing a contaminant or to recover and /or concentrate the substance present in the process stream.

There are many examples of industrial processes which utilize some variation of the above described steps. One widely practiced example is the use of amines or glycols to remove contaminants from natural gas streams. Since these systems operate in a constant loop, it is necessary to remove contaminants from these solvent streams to protect the equipment in the loop and maintain the removal efficiencies. Solid filters have been used in the past to remove solid contaminants from the liquid solvent streams. However, hydrocarbons and other non-solid contaminants are also present in small quantities and eventually build up, having a detrimental effect on the process performance. Activated carbon has proven very effective in removing these non-solid contaminants. The common type of carbon currently in use is granular activated carbon (GAC). This GAC is placed in the solvent stream in two ways: either as part of a cartridge canister within a housing or in a fixed bed placed within a housing.

Activated carbon filters of this type work quite effectively, but are subject to certain limitations. First of all, due to the limited flow rate allowed through the carbon, the carbon filters must be very large to accommodate the total solvent flow. This leads to the practice of only treating a part of the solvent on each pass, i.e., the use of a slip stream. Using a slip stream reduces the size of the carbon vessel which is required, but treats the solvent less effectively than where a full flow filter is utilized. Another limitation of the state of the art vessels concerns the fact that the GAC will release carbon fines into the process stream during the filtration operation, which requires that another solids filter be placed downstream of the carbon filter.

The result of this current practice is to require three filters to be placed in series to remove all the necessary contaminant from a solvent stream. The solvent must be filtered for solids, which is almost always done with the full flow of solvent going through this filter. Then a carbon filter together with a downstream solids filter is placed in the solvent stream. This can either be done with the full flow of the solvent going through these filters, or as explained above, these filters can be arranged so that they only receive a portion or slip stream of the total solvent flow.

In the last few years, in order to increase performance, new solvents have been introduced that are even more susceptible to solid and liquid contamination than in the past. This makes the performance of the filtration system in the solvent stream even more critical.

A need therefore exists for continued improvements in filter elements and filtration processes of the above described type in order to increase filtration efficiency.

A need also exists for such an improved filter element and vessel which will eliminate the use of multiple filter vessel housings in a filtration process of the type described.

A need also exists for such an improved filter element which can provide the capability to filter the full process stream in most cases.

The document EP 1 281 677 A describes a carbon block filter having a central bore, which is surrounded by a protective depth filter. This depth filter may be formed with fibers and an adhesive or be in form of a membrane.

### Disclosure of Invention

It is accordingly an object of the present invention to provide a system that eliminates the need for multiple housings in a filtration process of the type described, replacing the multiple housings with a single housing.

Another object of the invention is to accomplish the elimination of multiple filter housings of the above described type, while also improving the overall filtration effect achieved, and while also providing the capability to filter the full process stream in almost all cases.

The preferred filter element of the invention include a filter element body having a length and a central bore which extends between opposing ends thereof. The central bore is surrounded by a carbon block filter media, the carbon block filter media being, in turn, surrounded by a protective depth filter media. The protective depth filter media can comprise various depth filtration media known in the relevant industries.

The protective depth filter media is comprised of sheets of non-woven fabric formed of a mixture of a base fiber and a binder material that is compressed to form a sheet of selected porosity, the sheet being formed as a helically wound tube of plural sheets, each sheet being heated and compressed to bind the base fiber into a porous filter element.

The preferred carbon block filter media is formed by providing a quantity of first particles of a binder material. A quantity of second particles of activated carbon having a softening temperature substantially greater than the softening temperature of the binder material is combined with the first quantity of particles to form a uniform mixture. The substantially uniform mixture of particles is extruded from an extruder barrel into a die. The mixture of particles is heated to a temperature substantially above the softening temperature of the binder material but to a temperature less than the softening temperature of said primary material, the heated mixture being subsequently converted into a substantially homogeneous composite material. The composite material is rapidly cooled to below the softening point of the binder material to produce the composite material. The composite material is then extruded from the die as an extruded solid composite material product in the shape of a carbon block filter.

The first and second bands being overlapped and bonded to form a porous, self-supporting filter element.

The invention also comprises an apparatus for filtering a liquid stream such as a natural gas processing liquid stream containing glycols or amines. The apparatus includes a closed vessel having a length and an initially open interior. A partition is disposed within the vessel interior. The partition has a planar inner and planar outer side, respectively, dividing the vessel interior into a first stage and a second stage. At least one opening is provided in the partition. An inlet port is provided in fluid communication with the first stage. An outlet port also provides fluid communication from the second stage. At least one tubular filter element is disposed within the vessel to sealingly extend within the first stage. The filter elements are comprised of carbon block filter media surrounded by protective depth filter media, as previously described.

The above as well as additional objects, features, and advantages of the invention will become apparent in the following detailed description.

### Brief Description of Drawings

Figure 1 is a simplified perspective view, partly broken away, of a liquid filter vessel of the type which might utilize the improved filter elements of the invention.
Figure 2 is a side, partly schematic view of a prior art filter vessel of the type using granulated activated carbon as a filtration media.
Figure 3 is a perspective view of a filter element of the invention, shown partly broken away for ease of illustration.

### Best Mode for Carrying Out the Invention

The particular type of filter vessel utilized with the improved filter elements of the invention may assume various configurations. For example, those familiar with the oil and gas production industries will be familiar with filtration vessels containing filter elements for filtering dry gas streams as well as for separating solids and liquids from contaminated gas streams. Often these types of vessels are installed in a gas pipeline, to perform these filtering functions. U.S. Patent No.'s 5,919,284, issued July 6, 1999, and 6,168,647, issued Jan 2, 2001, both to Perry, Jr., and assigned to the assignee of the present invention, disclose filtration vessels using individual filter elements to separate solids, filter liquids, and coalesce liquids. The foregoing multi-stage vessels, as well as a multitude of other similar filtration vessels used in industry utilize solid or hollow core tubular elements, typically formed at least party of a porous filtration media. For example, porous filtration elements useful in the above type of filtration vessels are of the same general type as those that are described in U.S. Patent No. 5,827,430, issued October 27, 1998 to Perry, Jr., et al., and assigned to the assignee of the present invention.

The present invention makes use of the porous filtration element technology of the type described in the above mentioned Perry, Jr., et al. patent in combination with another fairly recent technology, referred to herein as the extruded "carbon block filter media." A general explanation of carbon block technology can be found in the following issued United States patents, among others: U.S. Patent No. 5,189,092, issued February 23, 1993, to Koslow; U.S. Patent No. 5,331,037, issued July 19, 1994, to Koslow; and U.S. Patent No. 5,922,803, issued July 13, 1999, to Koslow et al. These patents describe a method and apparatus for the continuous extrusion of composite solid articles from feed mixtures made up of a substantially uniform mixture of particulate binder material and particulate primary material, which is typically activated carbon. The feed mixture is forced through an extrusion die of substantially uniform cross-section. The particulate feed mixture is subjected to heat, pressure and cooling which consolidates the mixture, whereby it emerges from the die as a solid composite article. Solid filter elements of activated carbon particles for a wide variety of filtering applications may be formed using the described process and apparatus.

There are also other ways to create carbon block filter media which will be familiar to those skilled in the art. For example, a carbon block can be created from similar starting materials to those described by pressing the materials together with heat in a suitable mold.

Technology of the above type was developed in the early 1990's and has virtually replaced the use of GAC for the carbon filters that are found at point of use in many household type applications. The advantages of the carbon block filtration media over GAC are manifold. Three of the most significant advantages are kinetics, the ability of the carbon block to act as a solids filter as well as an adsorption device, and the fact that the carbon block does not shed carbon fines into the process stream being filtered.

Activated carbon removes hydrocarbons and other contaminants by adsorbing them onto the surface of the carbon at a molecular level. A measure of how quickly this reaction takes place is referred to in the discussion which follows as the "kinetics" of the process. With the intimate contact and smaller carbon particles of the carbon block, the kinetics are an order of magnitude greater than when using GAC as the filtration media. As a result, the residence time during which the flow must remain in contact with the carbon is greatly reduced. This allows the flow rates across the carbon to be increased, while the vessel size required to treat a given stream becomes significantly smaller.

Although the advantages of carbon block filters are known in various industries, certain aspects of their fu nctioning have limited their use in industrial processes of the type with which the present invention is concerned. For example, the fact that the carbon block is also a very good filter presents an opportunity for removing solids with the carbon block as well as the adsorbed liquids. However, this presents a challenge in that the carbon block could become prematurely blocked with solids, and plug prior to fully utilizing the adsorptive capacity of the carbon. It also can mean having to shut down and change out the filters more often than would be required by the adsorption alone. This solids filtration capacity of the carbon block is not a problem in many of its current applications, such as in drinking water, where solids contamination, if it exists, is very small. However, in the case of process streams, solids contamination can be significant. As a result, the carbon block technology of the above described type has not, to Applicant's knowledge, been widely adapted to industrial process stream filtration technologies.

Applicant's invention address the above shortcomings inherent with the use of the carbon block technology, thereby facilitating the use of carbon block technology in industrial process stream filtration applications. This objective is accomplished by marrying the previously described carbon block technology with a surrounding layer of protective porous depth filtration media. The surrounding depth filtration outer layer can be, for example, Applicant's patented PEACH® technology described in issued U.S. Patent No. 5,827,430, issued October 27, 1998, and U.S. Patent No. 5,893,956, issued April 13, 1999.

In some applications, the porous depth filtration media could also comprise, for example, a meltblown or spunbond filter, a fiberglass glass filter, etc. These depth filters would include fibers bound together to create a filtration system to remove the solids contaminants which might prematurely plug the filter. The spun bond or meltblown is created by making a fiber matrix by heating a polymer like polypropylene and then extruding it through small orifices to create a matrix of very fine fibers, these fibers are then laid together to create a filter cartridge or a filter media of specific performance characteristics. The fiberglass tube uses fine glass fibers which are laid into a thick matt, which is then wound upon itself and bound using a resin binder of some form.

Another embodiment of the present inventive concept would include the use of a "pleat pack" of filtration media which would be placed over the carbon block. Pleat packs are known in the present industry and will be familiar to those skilled in the relevant arts. While the pleated media would remove the solids contamination, this would be less effective in removing any liquid contaminants.

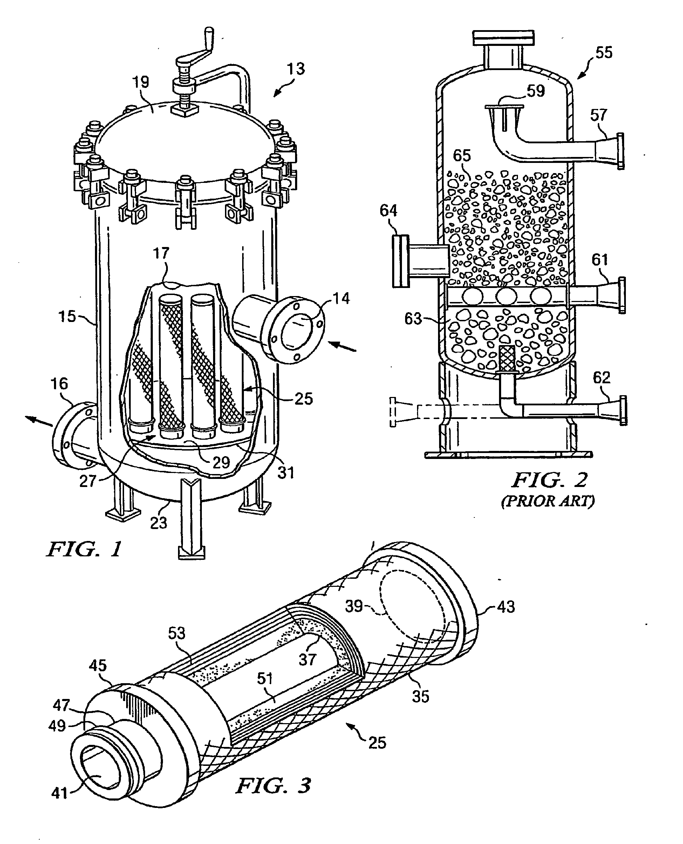

Turning to Figure 1 there as shown a filter vessel of the invention designated generally as 13 of the type which is used to filter a fluid stream in an industrial process. By the term "fluid" in this discussion is meant either "liquid" and/or "gas." The particular filter vessel 13 which is shown in Figure 1 is a liquid filter. Filter vessels of the general type illustrated might be utilized, for example, in oil and gas separation processes and similar industrial environments. While Figure 1 illustrates one embodiment of a liquid filtration vessel, it will be understood by those skilled in the art that the filter elements covered by the present invention can be applied to a variety of such vessels used in the industry. For example, the filter elements of the invention might be employed in vessels which are used for simultaneously filtering solids, separating liquids, pre-coalescing liquids, and coalescing liquids out of a gas stream. The filter elements might also be utilized in vessels used for coalescing and separating two liquids and for filtering solids out of liquids. Also, while the vessel shown in Figure 1 illustrates four principally visible filter elements mounted within the vessel above the vessel partition, it will be understood that some vessel designs will employ a variable number of elements, i.e., either more or less elements, depending upon the end application for the filter vessel.

Referring again to Figure 1, it should be understood that although the vessel 13 is shown in a generally vertical configuration, that other vessels of the same general type may also be configured in a generally horizontal embodiment The vessel 13 has a generally tubular shell 15 which forms a closed vessel having a length and an initially open interior 17. The vessel has an inlet 14 and an outlet 16. The shell 15 is enclosed at an upper end thereof by means of a closure member which, in this case, is a fluid tight flange. The shell 15 is permanently enclosed at a bottom end 23 by a welded base. The flanged closure 19 provides a fluid tight seal with respect to the inlet 14 as well as access to the filter elements. In the embodiment of Figure 1, four filter elements 25 are supported within the vessel open interior 17 by means of a vessel partition 27. The vessel 13 is preferably manufactured of steel materials which conform to published pressure-vessel standards, such as ASME Boiler and Pressure Vessel Code, Section VIII, Division 1.

The partition 27 which divides the vessel interior into the first and second filtration chambers has a planar inner and planar outer opposing sides 29, 31, respectfully. An opening is provided in the partition 27 for each filter element to be mounted thereon. As will be familiar to those skilled in the relevant industry, a vertically extending riser is typically mounted over each partition opening, as by welding, for receiving an end of a filter element to support the filter element on the partition. The tubular filter elements 25 are disposed within the vessel to sealingly extend within the first chamber and to communicate through the associated riser and its associated opening in the partition 27 into the second chamber of the vessel. Liquid flow is through the inlet port 14, through the first chamber, through the riser interiors, Into a hollow interior of the filter elements 25 and out the sidewalls thereof, and through the second chamber to the outlet 16. The direction of the liquid flow is indicated by the arrows in Figure 1.

Each of the filter elements 25 (Figure 3) comprises a tubular body with generally cylindrical sidewalls 35. The filter elements have an interior bore 37, a first end opening 39, and an oppositely arranged second end opening 41. The end openings 39,41 are surrounded by end caps 43, 45, respectively, which may be formed, for example, of metal or rigid plastic. The end cap 45, in the embodiment of the device illustrated, terminates in an outlet member 47 which has an external O-ring seal region 49.

The interior bore 37 of the filter elements is surrounded by the carbon block filter media 51 which forms a generally cylindrical layer about the central bore 37. The carbon block filter media 51 is comprised of the material described in the previously mentioned issued United States patents, among others: U.S. Patent No. 5,189,092, issued February 23, 1993, to Koslow; U.S. Patent No. 5,331,037, issued July 19, 1994, to Koslow; and U.S. Patent No. 5,922,803, issued July 13, 1999, to Koslow et al. "Example 1" of U.S. Patent No. 5,189,092, describes an exemplary process as follows:
An extruded activated carbon filter useful as a high performance water filter element which removes sediment, chlorine, taste, odor, volatile organic compounds, heavy metals such as lead, hydrogen sulfide and soluble metal components, and having a density of about 0.84 gm/cm³ can be extruded by a process comprising:
   a) about 50 to about 60% by weight activated carbon particles;
   b) about 27.5% to about 37.5% by weight micronized manganese dioxide particles of at least about -100 mesh size, and
   c) about 12.5% to about 22.5% by weight binder particles having diameters between about 0.1 and about 250 micrometers, and preferably from a composition comprising:
      a) about 55% by weight activated carbon particles of a mesh size of about 50.times.200;
      b) about 30% by weight of micronized manganese dioxide, and
      c) about 15% by weight polyethylene binder particles.

A feed mixture of 55% by weight Barnaby Sutcliffe coconut shell activated carbon 50-200 mesh particles, 30% by weight micronized Mn₂ -400 mesh particles and 15% by weight 510 grade polyethylene binder particles (USI Division of Quantum Chemical Corporation) was mixed in a 600 lb lot in a plow mixer (S. Howes, Silver Creek, N.Y.) for about five hours until a substantially uniform stable aggregated mixture was obtained. The mixture was then feed into an extruder. The auger style extruder screw 2.5" OD, 1.25" root was rotated at 3 rpm. The extruder barrel was maintained at ambient room temperature, about 20°C., while the first die heating zone was maintained at 340° F. (173°C.) and the second die heating zone at 380°F. (194°C.) and the cooling zone at 95° F. (44° C.). The die was a 4140 stainless steel die 2.5" OD, 18" overall length, with each heating and cooling zones being 6" in length. The extruder screw was equipped with a 1.25" diameter, smooth, 4140 stainless steel center rod screwed into the tip of the screw, with the center rod extending into the center of the die so that a 2.5" OD, 1.25" ID cylindrical filter element is extruded. A doughnut type back pressure device was employed to provide sufficient back pressure to consolidate the feed mixture into the product, with the product being produced at a rate of about 2" per minute and having a density of about 0.84 gm/cm³.

The above description of the process described in issued U.S. Patent No. 5,189,092, is merely intended to be representative of the art generally in the area of carbon block filter media.

Surrounding the carbon block filter media 51 is a protective layer 53 (Figure 3) of a porous depth filtration media. The construction of the porous depth filter media can vary depending upon the particular end application of the filtration vessel. The depth filter media 53 can conceivably be formed of any material conventionally used in the art, including the previously described meltblown or spunbond filter media, fiberglass glass filter media, etc. However, the preferred depth filter media layer is constructed in the manner and of the materials disclosed in U.S. Patent No. 5,827,430, issued October 27, 1998 to Perry, Jr., et al. Such filter elements are sold commercially under the PEACH® trademark by Perry Equipment Corporation of Mineral Wells, Texas.

An example of a typical manufacturing process for the depth filtration media of the filter elements of the invention is given at Col. 13, lines 66 et seq. of the issued U.S. Patent No. 5,827,430, as follows:
Four different types of fibers were purchased from Hoechst Celanese of Charlotte, N.C., sold under the fiber designation "252," "121," "224," and "271". Fiber "252" was of the core and shell type, whereas fibers "121," "224," and "271" were of the single component pure type. The denier of fiber "252" was 3 and its length was 38,1 m (1.500 inches). The denier of fiber "121" was 1 and its length was 38,1 m (1.500 inches). The denier of fiber "224" was 6 and its length was 50,8 m (2.000 inches). The denier of fiber "271" was 15 and its length was 76,2 m (3.000 inches). A first blend of fibers was manufactured from fiber "121" and fiber "252" composed of 50% by weight of each fiber type. A second blend of fibers was manufactured from fiber "224" and fiber "252" composed of 50% by weight of each fiber type. A third blend of fibers was manufactured with a composition of 25% by weight of fiber "121" and 25% by weight of fiber "224" and 50% by weight of fiber "252". A fourth blend of fibers was manufactured from fiber "271" and fiber "252" composed of 50% by weight of each fiber type. Fiber "252" being of the core and shell type served as the binder fiber in each of the aforementioned blends. Each blend of fibers was formed into a web which was approximately ½ inch in thickness. The thickness of each web was reduced by approximately 50% forming a mat during its residence time of ninety seconds in the air draft ovens due to the recirculation of steam-saturated air at approximately 40,000 cubic feet per minute at a temperature of 400 degrees Fahrenheit. There was a differential pressure across the mat in the air draft ovens of 6 inches of water. Upon exiting the air draft ovens, each mat was fed between two stainless steel cylindrical rollers which compressed the thickness of each mat by approximately 50% into a sheet of nonwoven fabric with a width of about 37 inches. Each 37-inch wide sheet of nonwoven fabric was cut into 6-inch wide strips 13, 15, 17, 19. The basis weight of each sheet of nonwoven fabric was determined and to be in the range of 0.5 to 1.2 ounces per square foot. The strips of nonwoven fabric 13, 15, 17, 19 were then loaded onto the roll support shafts 79 of the roll support 75, one roll at each stage of the winding machine 71. The strips were then formed into a helically wound tube of plural sheets, each sheet being heated and compressed to bind the base fiber int a porous filter element.

The above example of particular types of material, fabric denier, number of wrapping layers, etc., is intended to be illustrative only of one type of porous depth filter material useful in the practice of the present invention. The denier, number of wrappings, etc. will obviously be determined by the nature of the filter application being undertaken.

The operation of the invention will now be described. First with reference to Figure 2, there is shown a prior art granulated activated charcoal filtration vessel 55 designed primarily for the purification of glycol and amine streams. The particular vessel 55 in Figure 2 features an inlet 57, an inlet distributor 59 and an outlet 61. A filtrant support bed 63 located above a bottom drain 62 supports a quantity of granulated activated charcoal (GAC) 65. The particular vessel 55 shown in Figure 2 also has a cleanout port 64. Vessels of this type are often installed downstream of full-flow type solids filters to adsorb dissolved hydrocarbons, fatty acid well inhibitors and certain degradation compounds from glycol and amine systems. An adequate filtration system reduces problems of foaming, fouling and corrosion and maintains consistently higher solution efficiency. As has briefly been explained, a well designed glycol dehydration or amine treating system incorporates an efficient filter /separator on the inlet gas stream to prevent free liquids and solid particles from entering the contactor tower. In the glycol regeneration process, the adsorber filtration unit is typically located downstream of the full-flow filter and removes impurities which the full-flow filter is not designed to remove.

Applicant's invention replaces the GAC material of the vessel 55 with the filter elements of the invention shown in Figures 1 and 3. As previously described, the filter elements of the invention utilize a carbon block filter media 51 surrounded by a porous depth filtration media, such as a layer of PEACH® filtration media. By using a surrounding layer of porous depth filtration media, the solids contamination is removed prior to the stream coming in contact with the carbon block. A filtration tube can be manufactured and placed over the carbon block and in close contact with the carbon block outside diameter of the carbon block. The outer protective layer of depth filtration media eliminates the tendency of solids to prematurely plug the inner carbon block. The combined cartridge can be engineered such that the solids removal capacity and the liquid contaminant adsorptive capacity can be matched. As an example, in one test the dirt holding capacity of the carbon block was increased four times.

There are actually two removal mechanisms at work in the hybrid filtration system of the invention. In the first mechanism, solids removal is based on kinetics, sieving, impaction, etc., this function being performed by the depth filtration media, i.e., the PEACH® tube. The second removal mechanism is the removal of non-solids by the carbon block filter media. The second mechanism is based upon the chemical bonds (adsorption) between the high surface area particles in the carbon block matrix and fluid contaminants where the contaminants are, for example, hydrocarbons or dissolved chemicals such as chlorine and the like. The "matching" which occurs in the hybrid filter elements of the invention can be thought of as the sizing the two parts of the element such that the two processes are expended at the same rate. The PEACH® portion of the filter element will plug with solids and therefore reach its useful life span at approximately the same time that the sorbitive ability of the carbon block portion of the filter element is used up. The PEACH® depth filtration layer protects the carbon block from being rendered ineffective by solids plugging, thereby greatly extending the carbon block's useful life.

The carbon block filter media removes solids very efficiently. This is a result of the depth design and the way the carbon is put together in the block. This means that if the stream has solids in it, the carbon block could plug with solids prior to the adsorptive capacity of the carbon is used up. In this case, the hybrid filter would not be "matched." This plugging with solids would result in a high differential pressure and so the block would require changing, but it would still have capacity to adsorb more contaminant. This is where the PEACH® filter layer compliments the action of the carbon block. The depth filtration media of the hybrid design has a high dirt holding capacity and stops the solids so that the life of the carbon block is extended from a solids perspective, in addition to offering the opportunity to remove more of the contaminants that are adsorbed.

Applicant has also learned from actual field trials that the PEACH® matrix will actually tie up the hydrocarbon contaminant from the process stream. Because this action occurs on a macro level, this can greatly increase the adsorptive capacity of the overall system.

The result is a removal system that is engineered to use PEACH® technology and carbon block technology in a synergistic fashion. The PEACH® filter tube layer removes a bulk of the solids and some of the liquid contaminants followed by the carbon block which adsorbs the remaining liquid contaminant and provides the final absolute solids filtration. There is also the additional inherent advantage in the hybrid system of the invention in that the carbon block media does not tend to shed fines into the process stream. Therefore, no additional solids filter is required downstream of the filtration system of the invention.

As an example, assume the carbon block is designed to remove trace amounts of contaminant, with the process containing 2ppm of hydrocarbon, chlorine or other contaminant. A 25,4 cm (10 inch) length of element can be rated to treat a certain volume of liquid before using up its adsorption capacity. A reasonable number for a configuration of carbon block may be, for example, 295262,1 l (78,000 gallons) per 1,5 m (60 inch) length of carbon block. It will also have a filtration efficiency in the 5 to 10 micron range. So, it will remove solid contaminants larger than 5 to 10 microns. Assuming that the solids contamination of the stream larger than 10 micron size is 6ppm, there will be about 4 pounds of solids in the previously recited 295262,1 l (78,000 gallons) of water. The carbon block itself may only be able to handle one pound or less of these solids before the porosity in the block plugs and the differential in the block is so high that it will need to be changed out. In this case, the carbon block will be changed while only treating less than 75708,2 l (20,000 gallons) of fluid, which is one fourth of its capacity. Operating the carbon block in this fashion would incur costs which are some four times that required for the adsorption alone. By combining the carbon block with the depth filtration element, the solids capacity of the system can be increased by four times, which results in the cartridges being changed one fourth as often and the adsorption capacity of the block being fully utilized.

Additionally, as has been briefly mentioned, large agglomerations of the liquid contaminant to be adsorbed can be tied up in the PEACH®, or depth matrix, prior to it coming into contact with the carbon block. This relieves the carbon of having to adsorb this contaminant and extends the life of the carbon block.

With a proper understanding of the contamination species in the fluid, the PEACH® tube or depth tube which surrounds the carbon block can be designed to match the solids removal capacity with the adsorption capacity of the system. This "matching" creates an optimal and particularly cost effective solution to the overall contamination problem of the fluid. The process can also be performed using only one filtration vessel.

The following laboratory summary is taken from an actual case history and is merely intended to be illustrative of the principles of the invention:
Laboratory Report on Tests Completed April 24, 2006

### PROJECT # CE060411-105-3

### SAMPLE(S):

Used filter element "CB500-7-20L" from EOG Resources, Big Piney, WY.

### TEST REQUESTED:

Particle size distribution, Microscopics, Contaminant ID, Digital photos.

### RESULTS:

Visual examination of the filter element found it to be in great condition. Both end seals were good and all components were intact, this being the bottom o-rings and top bale handle. A small representative sample was removed from the element for examination. The outer PEACH® sleeve that was designed to protect the internal carbon block was relatively clean on the outside with a heavy loading of what appeared to be hydrocarbons trapped within the middle layers. The outside layer of the sleeve contained solids measuring from 5 to approximately 220 microns in size. Some agglomerations were also observed measuring up to 600 microns in size. The outside layer of the sleeve did not contain a great deal of solids.

The middle layers of the PEACH sleeve contained solids measuring from 2 to 60 microns in size. These solids appeared to be mostly iron formations with some sand particles present. A heavy layer of what appeared to be hydrocarbons was present on these middle layers. Approximately 80% of the middle layer contained trapped hydrocarbons with roughly 50% of these middle layers containing solids.

The upstream and downstream surfaces of the carbon block were swabbed with cotton to lift the solids for sizing. The upstream surface contained solids measuring from 2 to 50 microns and the downstream (core) surface contained solids, most of which measured less than 5 microns with trace solids measuring up to 10 microns in size.

An invention has been provided with several advantages. The filter elements of the invention match adsorption with solid contaminant removal, as well as exhibiting the ability to expand the adsorption capacity of the system by trapping hydrocarbon or other contaminants in the depth filter matrix. The filter elements and filtration process of the invention provides a system that eliminates the need for multiple filter housings, replacing the multiple housings with a single housing. The elimination of multiple filter housings is accomplished while also improving the overall filtration effect achieved, and while also providing the capability to filter the full process stream in almost all cases. The full flow filtration which is achieved improves the performance from the current designs utilizing only filter slip streams. In cases where the flow is still so great that flow from a slip stream cannot be eliminated, the percentage of total solvent flow going through the slip stream carbon filter can be greatly increased.

The overall filtration capacity of the system is greatly increased over the current existing practice. This advantage can be viewed from two perspectives: the perspective of designing and installing a new system and the perspective of operating a solvent system. Looking at the costs and benefits from the design and installation perspective, there are great benefits. Instead of using three separate vessels with their associated isolation valves and instrumentation, only one vessel is required. The size of the one filtration unit of the invention is smaller than the GAC carbon vessel currently being used in industry. As a result, the cost of installation of this portion of the industrial process can be reduced nearly 66%.

From an operating standpoint there are also great benefits. It is only necessary to change out cartridges and carbon from one vessel. Changing the filter cartridges of the invention is far easier than the method often used to change out GAC carbon that is placed in a fixed bed and is often dug out. The overall performance of the solvent increases as a result of the improved filtration supplied. The necessity of stocking three different media types for the three filters is reduced to stocking only one type replacement filter cartridge.

## Claims

1. An apparatus for filtering a fluid process stream, the apparatus comprising:
• a closed vessel having a length and an initially open interior;
• a partition disposed within the vessel interior, the partition having a planar inner and planar outer side, respectively, dividing the vessel interior into a first stage and a second stage;
• at least one opening in the partition;
• an inlet port in fluid communication with the first stage;
• an outlet port in fluid communication with the second stage;
• at least one tubular filter element, the tubular filter element being mounted about the partition opening and being disposed within the vessel to sealingly extend from within the first stage;
• wherein the tubular filter element has a length and a central bore which extends between opposing ends thereof, the central bore being surrounded by a carbon block filter media, the carbon block filter media being, in turn, surrounded by a protective depth filter media,
• wherein the protective depth filter media is comprised of sheets of non-woven fabric formed of a mixture of a base fiber and a binder material that is compressed to form a sheet of selected porosity, the sheet being formed as a helically wound tube of plural sheets, each sheet being heated and compressed to bind the base fiber into a porous filter element.

2. The apparatus of Claim 1, wherein the carbon block filter media is an extruded solid composite material product which is formed by a process of:
• providing a quantity of first particles of a binder material;
• providing a quantity of second particles of activated carbon having a softening temperature substantially greater than the softening temperature of the binder material;
• combining the first and second quantities of particles in a substantially uniform mixture;
• extruding the substantially uniform mixture from an extruder barrel into a die of substantially uniform cross-section;
• heating the substantially uniform mixture within the die to a temperature substantially above the softening temperature of the binder material but to a temperature less than the softening temperature of said primary material;
• applying sufficient back pressure, from without the die, to the heated mixture within the die to convert the heated mixture into a substantially homogeneous composite material;
• rapidly cooling the composite material to below the softening point of the binder material to produce the composite material; and
• extruding the composite material from the die as an extruded solid composite material product.

3. A filter element useful for filtering a fluid process stream, the element comprising:
• a filter element body having a length and a central bore which extends between opposing ends thereof, the central bore being surrounded by a carbon block filter media, the carbon block filter media being, in turn, surrounded by a protective depth filter media;
• wherein the protective depth filter media is comprised of sheets of non-woven fabric formed of a mixture of a base fiber and a binder material that is compressed to form a sheet of selected porosity, the sheet being formed as a helically wound tube of plural sheets, each sheet being heated and compressed to bind the base fiber into a porous filter element.

4. The filter element of Claim 3, wherein the carbon block filter media is formed by a process of:
• providing a quantity of first particles of a binder material;
• providing a quantity of second particles of activated carbon having a softening temperature substantially greater than the softening temperature of the binder material;
• combining the first and second quantities of particles in a substantially uniform mixture;
• extruding the substantially uniform mixture from an extruder barrel into a die of substantially uniform cross-section;
• heating the substantially uniform mixture within the die to a temperature substantially above the softening temperature of the binder material but to a temperature less than the softening temperature of said primary material;
• applying sufficient back pressure, from without the die, to the heated mixture within the die to convert the heated mixture into a substantially homogeneous composite material;
• rapidly cooling the composite material to below the softening point of the binder material to produce the composite material; and
• extruding the composite material from the die as an extruded solid composite material product.

5. The filter element of Claim 3, wherein the carbon block filter media is formed by a process of:
• providing a quantity of first particles of a binder material;
• providing a quantity of second particles of activated carbon having a softening temperature substantially greater than the softening temperature of the binder material;
• combining the first and second quantities of particles in a substantially uniform mixture;
• heating the substantially uniform mixture of particles and pressing them together in a mold at a temperature substantially above the softening temperature of the binder material but to a temperature less than the softening temperature of said primary material to thereby convert the heated mixture within the mold into a substantially homogeneous composite material;
• cooling the composite material to below the softening point of the binder material to produce the composite material; and
• removing the composite material from the mold as a solid composite material product.

6. The filter element of Claim 3, wherein the protective depth filter media is comprised of:
• a nonwoven fabric comprising a substantially homogeneous mixture of a base fiber and a binder material compressed to form a first nonwoven fabric strip of selected porosity; the first nonwoven fabric strip being spirally wound upon itself in multiple overlapping layers to form a first band having a selected radial thickness;
• a second nonwoven fabric comprising a substantially homogeneous mixture of a base fiber and a binder fiber compressed to form a second nonwoven fabric strip of selected porosity;
• the second fabric strip being spirally wound upon itself in multiple overlapping layers to form a second band having a selected radial thickness;
• the first and second bands being overlapped and bonded to form a porous, self-supporting filter element.

7. The filter element of Claim 3, wherein the protective depth filter media is comprised of:
• a nonwoven fabric comprising a substantially homogeneous mixture of a base fiber and a binder material thermally fused and compressed to form a first nonwoven fabric strip of selected porosity;
• the binder material having at least a surface with a melting temperature lower than that of the base fiber, the base fiber and the binder material being thermally fused at a temperature to melt at least the surface of the binder material to bind the base fibers, when the fabric is cooled, into the first nonwoven fabric strip;
• the first nonwoven fabric strip being spirally wound upon itself in multiple overlapping layers to form a first band having a selected radial thickness and an axial length;
• at least a second nonwoven fabric comprising a substantially homogeneous mixture of a base fiber and a binder fiber thermally fused and compressed to form a second nonwoven fabric strip of selected porosity;
• the binder material of the second nonwoven fabric having at least a surface with a melting temperature lower than that of the base fiber, the base fiber and the binder material being thermally fused at a temperature to melt at least the surface of the binder material to bind the base fibers, when the fabric is cooled, into the second nonwoven fabric strip;
• the second fabric strip being spirally wound upon itself in multiple overlapping layers to form a second band having a selected radial thickness; the second fabric strip being overlapped along at least a portion of the axial length of the first fabric strip and again fused at a temperature to melt at least a surface of the binder material in the nonwoven fabric strips to bind the base fibers of the first and second bands into a porous, self-supporting filter element.

8. The filter element of Claim 6 or 7, wherein the first and second nonwoven fabric strips have differing porosities.

9. The filter element of Claim 3, wherein the filter element is comprised of three or more overlapped bands of multi-overlapped nonwoven fabric strips.

10. The filter element of Claim 9 , wherein each band includes at least three overlapped layers which give the band a selected radial thickness.

11. A method of manufacturing a hybrid filter element, the method comprising the steps of:
• forming a filter element body having a length and a central bore which extends between opposing ends thereof, the central bore being surrounded by a carbon block filter media, the carbon block filter media being, in turn, surrounded by a protective depth filter media; and
• wherein the carbon block filter media has a known adsorption capacity, and wherein the depth filter media is sized to match the solids removal capacity of the filter element with the adsorption capacity of the carbon block filter media,
• wherein the protective depth filter media is comprised of sheets of non-woven fabric formed of a mixture of a base fiber and a binder material that is compressed to form a sheet of selected porosity, the sheet being formed as a helically wound tube of plural sheets, each sheet being heated and compressed to bind the base fiber into a porous filter element.

12. The method of claim 11, wherein the adsorption capacity of the filter element is increased by trapping solid contaminants in the protective depth filter media before such solid contaminants contact the carbon block filter media.

## Patentansprüche

1. Vorrichtung zum Filtern eines Fluid-Prozessstroms, wobei die Vorrichtung Folgendes umfasst:
• einen geschlossenen Behälter mit einer Länge und einem anfänglich offenen Inneren;
• ein Trennelement, das innerhalb des Behälterinneren angeordnet ist, wobei das Trennelement jeweils eine ebene innere und eine ebene äußere Seite hat und das Behälterinnere in eine erste Stufe und eine zweite Stufe teilt;
• mindestens eine Öffnung in dem Trennelement;
• einen Einlassanschluss in einer Fluidverbindung mit der ersten Stufe;
• einen Auslassanschluss in einer Fluidverbindung mit der zweiten Stufe;
• mindestens ein rohrförmiges Filterelement, wobei das rohrförmige Filterelement um die Trennwandöffnung angebracht ist und innerhalb des Behälters angeordnet ist, um sich abdichtend von innerhalb der ersten Stufe zu erstrecken;
• wobei das rohrförmige Filterelement eine Länge und eine zentrale Bohrung, die sich zwischen gegenüberliegenden Enden davon erstreckt, aufweist, wobei die zentrale Bohrung von einem Kohlenstoffblock-Filtermedium umgeben ist, wobei das Kohlenstoffblock-Filtermedium wiederum von einem schützenden Tiefenfiltermedium umgeben ist,
• wobei das schützende Tiefenfiltermedium aus Lagen aus Vliesstoff besteht, die aus einer Mischung aus einer Grundfaser und einem Bindematerial gebildet werden, die zusammengepresst wird, um eine Lage mit gewählter Porosität zu bilden, wobei die Lage als ein wendelförmig gewickeltes Rohr aus mehreren Lagen gebildet wird, wobei jede Lage erhitzt und zusammengepresst wird, um die Grundfaser in ein poröses Filterelement einzubinden.

2. Vorrichtung nach Anspruch 1, wobei das Kohlenstoffblock-Filtermedium ein extrudiertes festes Verbundmaterialprodukt ist, das durch folgenden Prozess gebildet wird:
• Bereitstellen einer Menge von ersten Partikeln eines Bindematerials;
• Bereitstellen einer Menge von zweiten Partikeln aus Aktivkohle mit einer Erweichungstemperatur, die wesentlich größer als die Erweichungstemperatur des Bindematerials ist;
• Kombinieren der ersten und der zweiten Menge von Partikeln in einer im Wesentlichen gleichmäßigen Mischung;
• Extrudieren der im Wesentlichen gleichmäßigen Mischung aus einem Extruderzylinder in eine Düse mit im Wesentlichen gleichmäßigem Querschnitt;
• Erhitzen der im Wesentlichen gleichmäßigen Mischung innerhalb der Düse auf eine Temperatur, die wesentlich über der Erweichungstemperatur des Bindematerials, aber auf eine Temperatur, die geringer als die Erweichungstemperatur des Primärmaterials ist;
• Anlegen eines ausreichenden Gegendrucks von außerhalb der Düse an die erhitzte Mischung innerhalb der Düse, um die erhitzte Mischung in ein im Wesentlichen homogenes Verbundmaterial umzuwandeln;
• schnelles Abkühlen des Verbundmaterials unter den Erweichungspunkt des Bindematerials, um das Verbundmaterial zu erzeugen; und
• Extrudieren der Verbundmaterials aus der Düse als ein extrudiertes festes Verbundmaterialprodukt.

3. Filterelement, das zum Filtern eines Fluid-Prozessstroms nützlich ist, wobei das Element Folgendes umfasst:
• einen Filterelementkörper, der eine Länge und eine zentrale Bohrung, die sich zwischen gegenüberliegenden Enden davon erstreckt, aufweist, wobei die zentrale Bohrung von einem Kohlenstoffblock-Filtermedium umgeben ist, wobei das Kohlenstoffblock-Filtermedium wiederum von einem schützenden Tiefenfiltermedium umgeben ist;
• wobei das schützende Tiefenfiltermedium aus Lagen aus Vliesstoff besteht, die aus einer Mischung aus einer Grundfaser und einem Bindematerial gebildet werden, die zusammengepresst wird, um eine Lage mit gewählter Porosität zu bilden, wobei die Lage als ein wendelförmig gewickeltes Rohr aus mehreren Lagen gebildet wird, wobei jede Lage erhitzt und zusammengepresst wird, um die Grundfaser in ein poröses Filterelement einzubinden.

4. Filterelement nach Anspruch 3, wobei das Kohlenstoffblock-Filtermedium durch folgenden Prozess gebildet wird:
• Bereitstellen einer Menge von ersten Partikeln eines Bindematerials;
• Bereitstellen einer Menge von zweiten Partikeln aus Aktivkohle mit einer Erweichungstemperatur, die wesentlich größer als die Erweichungstemperatur des Bindematerials ist;
• Kombinieren der ersten und der zweiten Menge von Partikeln in einer im Wesentlichen gleichmäßigen Mischung;
• Extrudieren der im Wesentlichen gleichmäßigen Mischung aus einem Extruderzylinder in eine Düse mit im Wesentlichen gleichmäßigem Querschnitt;
• Erhitzen der im Wesentlichen gleichmäßigen Mischung innerhalb der Düse auf eine Temperatur, die wesentlich über der Erweichungstemperatur des Bindematerials, aber auf eine Temperatur, die geringer als die Erweichungstemperatur des Primärmaterials ist;
• Anlegen eines ausreichenden Gegendrucks von außerhalb der Düse an die erhitzte Mischung innerhalb der Düse, um die erhitzte Mischung in ein im Wesentlichen homogenes Verbundmaterial umzuwandeln;
• schnelles Abkühlen des Verbundmaterials unter den Erweichungspunkt des Bindematerials, um das Verbundmaterial zu erzeugen; und
• Extrudieren der Verbundmaterials aus der Düse als ein extrudiertes festes Verbundmaterialprodukt.

5. Filterelement nach Anspruch 3, wobei das Kohlenstoffblock-Filtermedium durch folgenden Prozess gebildet wird:
• Bereitstellen einer Menge von ersten Partikeln eines Bindematerials;
• Bereitstellen einer Menge von zweiten Partikeln aus Aktivkohle mit einer Erweichungstemperatur, die wesentlich größer als die Erweichungstemperatur des Bindematerials ist;
• Kombinieren der ersten und der zweiten Menge von Partikeln in einer im Wesentlichen gleichmäßigen Mischung;
• Erhitzen der im Wesentlichen gleichmäßigen Mischung von Partikeln in einer Form und Zusammenpressen von diesen bei einer Temperatur, die wesentlich höher als die Erweichungstemperatur des Bindematerials liegt, aber auf eine Temperatur, die geringer als die Erweichungstemperatur des Primärmaterials ist, um dadurch die erhitzte Mischung innerhalb der Form in ein im Wesentlichen homogenes Verbundmaterial umzuwandeln;
• Abkühlen des Verbundmaterials unter den Erweichungspunkt des Bindematerials, um das Verbundmaterial zu erzeugen; und
• Entnehmen des Verbundmaterials aus der Form als ein festes Verbundmaterialprodukt.

6. Filterelement nach Anspruch 3, wobei das schützende Tiefenfiltermedium aus Folgendem besteht:
• einem Vliesstoff, der eine im Wesentlichen homogene Mischung einer Grundfaser und eines Bindematerials umfasst, die zusammengepresst ist, um einen ersten Vliesstreifen mit gewählter Porosität zu bilden; wobei der erste Vliesstreifen spiralförmig in mehreren überlappenden Schichten um sich selbst gewickelt ist, um ein erstes Band zu bilden, das eine gewählte radiale Dicke aufweist;
• einem zweiten Vliesstoff, der eine im Wesentlichen homogene Mischung einer Grundfaser und eines Bindematerials umfasst, die zusammengepresst ist, um einen zweiten Vliesstreifen mit gewählter Porosität zu bilden;
• wobei der zweite Vliesstreifen spiralförmig in mehreren überlappenden Schichten um sich selbst gewickelt ist, um ein zweites Band zu bilden, das eine gewählte radiale Dicke aufweist;
• wobei das erste und das zweite Band überlagert und verbunden werden, um ein poröses, selbsttragendes Filterelement zu bilden.

7. Filterelement nach Anspruch 3, wobei das schützende Tiefenfiltermedium aus Folgendem besteht:
• einem Vliesstoff, der eine im Wesentlichen homogene Mischung einer Grundfaser und eines Bindematerials umfasst, die thermisch verschmolzen und zusammengepresst ist, um einen ersten Vliesstreifen mit gewählter Porosität zu bilden;
• wobei das Bindematerial zumindest eine Oberfläche mit einer Schmelztemperatur hat, die niedriger als diejenige der Grundfaser ist, wobei die Grundfaser und das Bindematerial bei einer Temperatur thermisch verschmolzen werden, um zumindest die Oberfläche des Bindematerials zu schmelzen, um die Grundfasern dann, wenn der Stoff abgekühlt wird, in den ersten Vliesstreifen einzubinden;
• wobei der erste Vliesstreifen in mehreren überlappenden Schichten spiralförmig um sich selbst gewickelt ist, um ein erstes Band mit einer gewählten radialen Dicke und einer axialen Länge zu bilden;
• mindestens einem zweiten Vliesstoff, der eine im Wesentlichen homogene Mischung einer Grundfaser und eines Bindematerials umfasst, die thermisch verschmolzen und zusammengepresst ist, um einen zweiten Vliesstreifen mit gewählter Porosität zu bilden;
• wobei das Bindematerial des zweiten Vliesstoffs zumindest eine Oberfläche mit einer Schmelztemperatur hat, die niedriger als diejenige der Grundfaser ist, wobei die Grundfaser und das Bindematerial bei einer Temperatur thermisch verschmolzen werden, um zumindest die Oberfläche des Bindematerials zu schmelzen, um die Grundfasern dann, wenn der Stoff abgekühlt wird, in den zweiten Vliesstreifen einzubinden;
• wobei der zweite Vliesstreifen in mehreren überlappenden Schichten spiralförmig um sich selbst gewickelt ist, um ein zweites Band mit einer gewählten radialen Dicke zu bilden; wobei der zweite Vliesstreifen entlang zumindest eines Teils der axialen Länge des ersten Vliesstreifens überlagert wird und erneut bei einer Temperatur verschmolzen wird, um wenigstens eine Oberfläche des Bindematerials in den Vliesstreifen zu schmelzen, um die Grundfasern des ersten und des zweiten Bandes in ein poröses, selbsttragendes Filterelement einzubinden.

8. Filterelement nach Anspruch 6 oder 7, wobei der erste und der zweite Vliesstreifen unterschiedliche Porositäten aufweisen.

9. Filterelement nach Anspruch 3, wobei das Filterelement aus drei oder mehr überlappenden Bändern aus mehrfach überlappenden Vliesstreifen besteht.

10. Filterelement nach Anspruch 9, wobei jedes Band mindestens drei überlappende Schichten umfasst, die dem Band eine gewählte radiale Dicke geben.

11. Verfahren zum Herstellen eines Hybridfilterelements, wobei das Verfahren die folgenden Schritte umfasst:
• Bilden eines Filterelementkörpers, der eine Länge und eine zentrale Bohrung, die sich zwischen gegenüberliegenden Enden davon erstreckt, aufweist, wobei die zentrale Bohrung durch ein Kohlenstoffblock-Filtermedium umgeben ist, wobei das Kohlenstoffblock-Filtermedium wiederum von einem schützenden Tiefenfiltermedium umgeben ist; und
• wobei das Kohlenstoffblock-Filtermedium eine bekannte Adsorptionskapazität hat und wobei das Tiefenfiltermedium so bemessen ist, dass die Feststoffbeseitigungskapazität des Filterelements der Adsorptionskapazität des Kohlenstoffblock-Filtermediums entspricht,
• wobei das schützende Tiefenfiltermedium aus Lagen aus Vliesstoff besteht, die aus einer Mischung aus einer Grundfaser und einem Bindematerial gebildet werden, die zusammengepresst wird, um eine Lage mit gewählter Porosität zu bilden, wobei die Lage als ein wendelförmig gewickeltes Rohr aus mehreren Lagen gebildet wird, wobei jede Lage erhitzt und zusammengepresst wird, um die Grundfaser in ein poröses Filterelement einzubinden.

12. Verfahren nach Anspruch 11, wobei die Adsorptionskapazität des Filterelements erhöht wird, indem feste Verunreinigungen in dem schützenden Tiefenfiltermedium eingefangen werden, bevor derartige feste Verunreinigungen das Kohlenstoffblock-Filtermedium berühren.

## Revendications

1. Dispositif de filtration d'un courant de traitement de fluide, le dispositif comprenant:
• une cuve fermée présentant une longueur et un intérieur initialement ouvert;
• une cloison disposée à l'intérieur de l'intérieur de la cuve, la cloison présentant un côté intérieur plan et un côté extérieur plan, respectivement, divisant l'intérieur de la cuve en un premier étage et un deuxième étage;
• au moins une ouverture dans la cloison;
• un orifice d'entrée en communication fluidique avec le premier étage;
• un orifice de sortie en communication fluidique avec le deuxième étage;
• au moins un élément de filtration tubulaire, l'élément de filtration tubulaire étant monté autour de l'ouverture de la cloison et étant disposé à l'intérieur de la cuve de façon à s'étendre de façon étanche à partir de l'intérieur du premier étage;
• dans lequel l'élément de filtration tubulaire présente une longueur et un alésage central qui s'étend entre des extrémités opposées de celui-ci, l'alésage central étant entouré par un média de filtration en bloc de carbone, le média de filtration en bloc de carbone étant à son tour entouré par un média de filtration en profondeur de protection,
• dans lequel le média de filtration en profondeur de protection est composé de feuilles de tissu non-tissé formées d'un mélange d'une fibre de base et d'un matériau liant qui est comprimé de façon à former une feuille à porosité sélectionnée, la feuille étant mise sous la forme d'un tube de plusieurs feuilles enroulé en hélice, chaque feuille étant chauffée et comprimée de façon à lier la fibre de base en un élément de filtration poreux.

2. Dispositif selon la revendication 1, dans lequel le média de filtration en bloc de carbone est un produit de matériau composite massif extrudé qui est formé par un procédé consistant à:
• procurer une quantité de premières particules d'un matériau liant;
• procurer une quantité de deuxièmes particules de carbone activé présentant une température de ramollissement sensiblement plus élevée que la température de ramollissement du matériau liant;
• combiner les première et deuxième quantités de particules en un mélange sensiblement uniforme;
• extruder le mélange sensiblement uniforme à partir d'un cylindre d'extrudeuse dans une matrice de section transversale sensiblement uniforme;
• chauffer le mélange sensiblement uniforme à l'intérieur de la matrice jusqu'à une température située sensiblement au-dessus de la température de ramollissement du matériau liant mais jusqu'à une température inférieure à la température de ramollissement dudit matériau primaire;
• appliquer une rétro-pression suffisante, depuis l'extérieur de la matrice, au mélange chauffé à l'intérieur de la matrice pour convertir le mélange chauffé en un matériau composite sensiblement homogène;
• refroidir rapidement le matériau composite jusqu'en dessous du point de ramollissement du matériau liant afin de produire le matériau composite; et
• extruder le matériau composite à partir de la matrice sous la forme d'un produit de matériau composite massif extrudé.

3. Elément de filtration utilisable pour la filtration d'un courant de traitement de fluide, l'élément comprenant:
• un corps d'élément de filtration présentant une longueur et un alésage central qui s'étend entre des extrémités opposées de celui-ci, l'alésage central étant entouré par un média de filtration en bloc de carbone, le média de filtration en bloc de carbone étant à son tour entouré par un média de filtration en profondeur de protection;
• dans lequel le média de filtration en profondeur de protection est composé de feuilles de tissu non-tissé formées d'un mélange d'une fibre de base et d'un matériau liant qui est comprimé de façon à former une feuille à porosité sélectionnée, la feuille étant mise sous la forme d'un tube de plusieurs feuilles enroulé en hélice, chaque feuille étant chauffée et comprimée de façon à lier la fibre de base en un élément de filtration poreux.

4. Elément de filtration selon la revendication 3, dans lequel le média de filtration en bloc de carbone est formé par un procédé consistant à:
• procurer une quantité de premières particules d'un matériau liant;
• procurer une quantité de deuxièmes particules de carbone activé présentant une température de ramollissement sensiblement plus élevée que la température de ramollissement du matériau liant;
• combiner les première et deuxième quantités de particules en un mélange sensiblement uniforme;
• extruder le mélange sensiblement uniforme à partir d'un cylindre d'extrudeuse dans une matrice de section transversale sensiblement uniforme;
• chauffer le mélange sensiblement uniforme à l'intérieur de la matrice jusqu'à une température située sensiblement au-dessus de la température de ramollissement du matériau liant mais jusqu'à une température inférieure à la température de ramollissement dudit matériau primaire;
• appliquer une rétro-pression suffisante, depuis l'extérieur de la matrice, au mélange chauffé à l'intérieur de la matrice pour convertir le mélange chauffé en un matériau composite sensiblement homogène;
• refroidir rapidement le matériau composite jusqu'en dessous du point de ramollissement du matériau liant afin de produire le matériau composite; et
• extruder le matériau composite à partir de la matrice sous la forme d'un produit de matériau composite massif extrudé.

5. Elément de filtration selon la revendication 3, dans lequel le média de filtration en bloc de carbone est formé par un procédé consistant à:
• procurer une quantité de premières particules d'un matériau liant;
• procurer une quantité de deuxièmes particules de carbone activé présentant une température de ramollissement sensiblement plus élevée que la température de ramollissement du matériau liant;
• combiner les première et deuxième quantités de particules en un mélange sensiblement uniforme;
• chauffer le mélange de particules sensiblement uniforme et les presser ensemble dans un moule à une température sensiblement au-dessus de la température de ramollissement dudit matériau liant mais jusqu'à une température inférieure à la température de ramollissement dudit matériau primaire afin de convertir ainsi le mélange chauffé à l'intérieur du moule en un matériau composite sensiblement homogène;
• refroidir le matériau composite jusqu'en dessous du point de ramollissement du matériau liant afin de produire le matériau composite; et
• enlever le matériau composite hors du moule sous la forme d'un produit de matériau composite massif.

6. Elément de filtration selon la revendication 3, dans lequel le média de filtration en profondeur de protection est composé de:
• un tissu non-tissé comprenant un mélange sensiblement homogène d'une fibre de base et d'un matériau liant comprimé pour former une première bande de tissu non-tissé à porosité sélectionnée; la première bande de tissu non-tissé étant enroulée en spirale sur elle-même en de multiples couches superposées de façon à former une première bande présentant une épaisseur radiale sélectionnée;
• un deuxième tissu non-tissé comprenant un mélange sensiblement homogène d'une fibre de base et d'une fibre de liant comprimé pour former une deuxième bande de tissu non-tissé à porosité sélectionnée;
• la deuxième bande de tissu étant enroulée en spirale sur elle-même en de multiples couches superposées de façon à former une deuxième bande présentant une épaisseur radiale sélectionnée;
• la première bande et la deuxième bande étant superposées et liées de façon à former un élément de filtration poreux autoportant.

7. Elément de filtration selon la revendication 3, dans lequel le média de filtration en profondeur de protection comprend:
• un tissu non-tissé comprenant un mélange sensiblement homogène d'une fibre de base et d'un matériau liant fondu thermiquement et comprimé pour former une première bande de tissu non-tissé à porosité sélectionnée;
• le matériau liant présentant au moins une surface avec une température de fusion inférieure à celle de la fibre de base, la fibre de base et le matériau liant étant fondus thermiquement à une température destinée à fondre au moins la surface du matériau liant afin de lier les fibres de base, lorsque le tissu est refroidi, dans la première bande de tissu non-tissé;
• la première bande de tissu non-tissé étant enroulée en spirale sur elle-même en de multiples couches superposées de façon à former une première bande présentant une épaisseur radiale sélectionnée et une longueur axiale;
• au moins un deuxième tissu non-tissé comprenant un mélange sensiblement homogène d'une fibre de base et d'une fibre de liant fondu thermiquement et comprimé pour former une deuxième bande de tissu non-tissé à porosité sélectionnée;
• le matériau liant du deuxième tissu non-tissé présentant au moins une surface avec une température de fusion inférieure à celle de la fibre de base, la fibre de base et le matériau liant étant fondus thermiquement à une température destinée à fondre au moins la surface du matériau liant afin de lier les fibres de base, lorsque le tissu est refroidi, dans la deuxième bande de tissu non-tissé;
• la deuxième bande de tissu étant enroulée en spirale sur elle-même en de multiples couches superposées pour former une deuxième bande présentant une épaisseur radiale sélectionnée; la deuxième bande de tissu étant recouverte le long d'au moins une partie de la longueur axiale de la première bande de tissu et de nouveau fondue à une température destinée à fondre au moins une surface du matériau liant dans les bandes de tissu non-tissé afin de lier les fibres de base de la première et de la deuxième bandes en un élément de filtration poreux autoportant.

8. Elément de filtration selon la revendication 6 ou 7, dans lequel la première et la deuxième bandes de tissu non-tissé présentent des porosités différentes.

9. Elément de filtration selon la revendication 3, dans lequel l'élément de filtration est composé de trois bandes recouvertes, ou plus, de bandes de tissu non-tissé à recouvrement multiple.

10. Elément de filtration selon la revendication 9, dans lequel chaque bande inclut au moins trois couches superposées qui confèrent à la bande une épaisseur radiale sélectionnée.

11. Procédé de fabrication d'un élément de filtration hybride, le procédé comprenant les étapes suivantes:
• former un corps d'élément de filtration présentant une longueur et un alésage central qui s'étend entre deux extrémités opposées de celui-ci, l'alésage central étant entouré par un média de filtration en bloc de carbone, le média de filtration en bloc de carbone étant à son tour entouré par un média de filtration en profondeur de protection; et
• dans lequel le média de filtration en bloc de carbone présente une capacité d'adsorption connue, et dans lequel le média de filtration en profondeur est dimensionné de façon à accorder la capacité d'enlèvement de solides de l'élément de filtration avec la capacité d'adsorption du média de filtration en bloc de carbone,
• dans lequel le média de filtration en profondeur de protection est composé de feuilles de tissu non-tissé formé d'un mélange d'une fibre de base et d'un matériau liant qui est comprimé pour former une feuille à porosité sélectionnée, la feuille étant mise sous la forme d'un tube de plusieurs feuilles enroulé en hélice, chaque feuille étant chauffée et comprimée de façon à lier la fibre de base en un élément de filtration poreux.

12. Procédé selon la revendication 11, dans lequel la capacité d'adsorption de l'élément de filtration est accrue en piégeant des polluants solides dans le média de filtration en profondeur de protection avant que ces polluants solides entrent en contact avec le média de filtration en bloc de carbone.
